# EUROPEAN PATENT SPECIFICATION

(11) **EP 4 507 990 B1**
(45) Date of publication and mention of the grant of the patent: **18.11.2026**
(21) Application number: 23720057.1
(22) Date of filing: 13.04.2023
(51) Int. Cl.: B65H 67/02

(54) **APPARATUS FOR MANAGING SPOOLS OF WIRE IN MACHINES FOR FORMING COMPONENTS OF ELECTRICAL WINDINGS**
VORRICHTUNG ZUR HANDHABUNG VON DRAHTSPULEN IN MASCHINEN ZUR HERSTELLUNG VON KOMPONENTEN ELEKTRISCHER WICKLUNGEN
APPAREIL DE GESTION DE BOBINES DE FIL DANS DES MACHINES DESTINÉES À FORMER DES COMPOSANTS D'ENROULEMENTS ÉLECTRIQUES

(30) Priority: 13.04.2022 IT 202200007310
(43) Date of publication of application: 19.02.2025
(73) Proprietor: ATOP S.p.A., 50028 Barberino Tavarnelle (IT)
(72) Inventor: CORBINELLI, Rubino, 53036 POGGIBONSI, Frazione Staggia Senese (IT)
(74) Representative: Modiano, Micaela Nadia
(86) International application number: PCT/EP2023/059682
(87) International publication number: WO 2023/198830

(56) References cited:
- WO-A1-2022/069145
- CN-A- 111 731 926
- DE-A1- 102018 102 914
- DE-A1- 3 933 910

## Description

The present invention relates to an apparatus for managing spools of wire in machines for forming components of electrical windings.

Electric motors, dynamos, alternators and transformers comprise a core of ferromagnetic material on which windings are arranged which are made with electrical wires arranged according to a specific geometry. The circulation of a current in at least one of the windings determines, by electromagnetic induction, the circulation of an induced current in at least one other winding. Furthermore, forces between the windings and the respective ferromagnetic cores act on each other and are capable, for example, of turning the rotor with respect to the stator in an electric motor.

Inductive windings are made with elements made of electrically conducting material (generally copper) which are covered with a layer of dielectric material (not electrically conducting), for their insulation. For specific applications, providing the windings is done using pieces of electrically conducting material coupled to each other at at least one end, which are inserted into the specific recesses present in the ferromagnetic cores of the machine under construction. These pieces are called "hairpins" in the technical jargon.

Elements of copper (or other electrically conducting material) with which hairpins are made are supplied in spools and are cut and shaped on specific machines. During processing, the copper (or other electrically conducting material) wire must be unreeled from the spool and supplied to the stations for cutting and bending.

The spools are normally very capacious, in order to minimize the substitution operations which require lengthy machine shutdown periods: for this reason a spool that is fully loaded with wire is extremely heavy.

After extracting the old spool, the operator (using forklift trucks and other, similar apparatuses) has to insert the new spool into the machine and deploy the wire so as to resume production.

It needs to be considered that, often, the machines comprise two lines for forming and cutting hairpins, and furthermore numerous machines can be installed in the same production site. It is therefore evident that machine shutdown times can add up if two or more lines use up their spool at about the same time. An operator will in fact be forced to deliver (by means of the above-mentioned forklift truck) a respective spool at each line, thus increasing the time required to resume production. In order to reduce these times, the company would have to hire more operators to carry out these operations and also to equip each operator with a forklift truck, which would entail extremely high management costs (which makes a protracted machine shutdown the preferred option).

DE 102018102914 A1 discloses an apparatus for managing spools of wire in machines for forming components of electrical winding, as defined in the preamble of claim 1.

The aim of the present invention is to solve the above-mentioned drawbacks, by providing an apparatus for managing spools of wire in machines for forming components of electrical windings that ensures the possibility to minimize the machine shutdown periods necessary for changing the spool.

Within this aim, an object of the invention is to provide an apparatus for managing spools of wire in machines for forming components of electrical windings that does not require a direct and immediate intervention by an operator for the substitution of a depleted spool.

Another object of the invention is to provide an apparatus for managing spools of wire in machines for forming components of electrical windings that is indicated for production sites that have numerous machines, without the need for a large number of dedicated operators.

Another object of the invention is to provide an apparatus for managing spools of wire in machines for forming components of electrical windings that is indicated for production sites that have numerous machines, without the need for a large number of forklift trucks.

Another object of the present invention is to provide an apparatus for managing spools of wire in machines for forming components of electrical windings which is low-cost, easily and practically implemented and safe in use.

This aim and these and other objects that will become more apparent hereinafter are achieved by an apparatus according to claim 1.

Such aim and such objects are also achieved through a machine according to claim 9.

Further characteristics and advantages of the invention will become more apparent from the detailed description that follows of a preferred, but not exclusive, embodiment of the apparatus for managing spools of wire in machines for forming components of electrical windings, which is illustrated by way of non-limiting example in the accompanying drawings wherein:

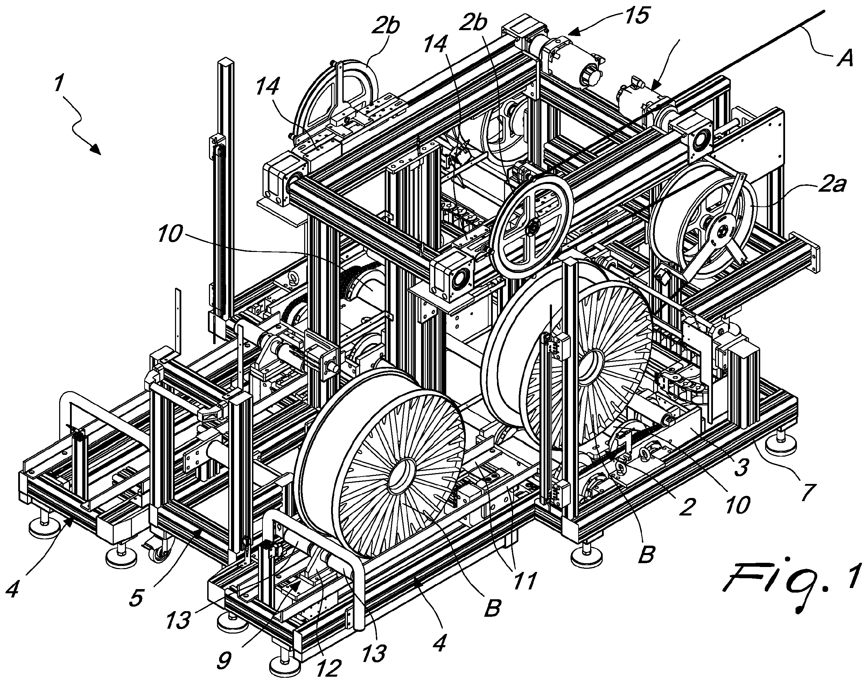

Figure 1 is a schematic perspective view of a possible embodiment of an apparatus for managing spools of wire in machines for forming components of electrical windings according to the invention in a first arrangement of operation;

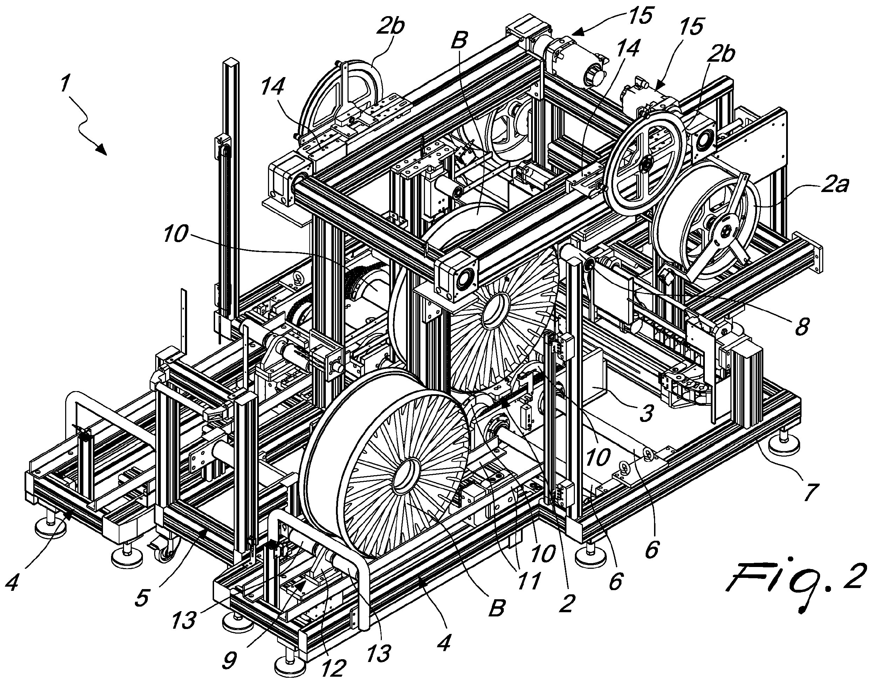

Figure 2 is a schematic perspective view of the apparatus of Figure 1 in a second arrangement, of moving a depleted spool;
Figure 3 is a schematic perspective view of the apparatus of Figure 1 in a third arrangement, of inserting a new spool and unloading the depleted spool.

With particular reference to the figures, the reference numeral 1 generally designates an apparatus for managing spools of wire A in machines for forming components of electrical windings.

The apparatus 1 according to the invention is suitable to be installed in machines for forming components of electrical windings which comprise at least one accommodation structure 2 for at least one spool B containing the wire A.

In a possible version of the apparatus according to the invention, illustrated by way of non-limiting example, the accommodation structure comprises at least one guide element 2a, 2b for the wire A and at least one station for bending and cutting the wire A (not shown in the accompanying figures) for the formation of the specific components (which can be, for example, hairpins designed for providing the stator or rotor winding of an electric motor).

The apparatus 1 further comprises at least one supporting carriage 3 for the at least one accommodation structure 2 of the at least one spool B. Such carriage 3 conveniently can slide along at least one respective transverse guide 6 of the machine for the transfer of the structure 2 from a first, active configuration for dispensing the wire A to a second, unloading configuration.

The apparatus 1 according to the invention can advantageously comprise at least one magazine 4 for the temporary accommodation of at least one spool B, on which the wire A is wound (such magazine 4 is placed side by side with the at least one accommodation structure 2 when the latter is in the active configuration for dispensing the wire A from the spool B), and at least one temporary storage unit 5 for at least one empty spool B.

The magazine 4 profitably comprises transfer means 9 which are configured to transfer at least one spool B arranged therein to the accommodation structure 2; the second, unloading configuration is envisaged for the delivery of an empty spool B to the temporary storage unit 5 by virtue of the action of at least one respective unloading actuator.

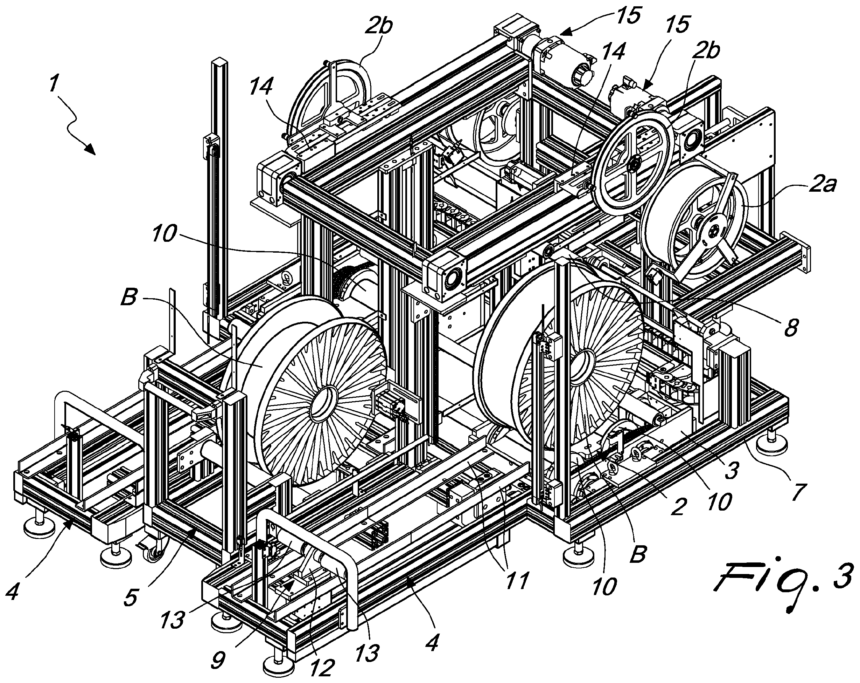

Once the change of the spool B has been carried out in one of the ways described above, it should be noted that by way of non-limiting example the apparatus 1 can have a configuration such as that shown in the accompanying Figure 3.

It should be noted that the at least one accommodation structure 2 can advantageously comprise a pair of parallel and laterally adjacent rollers 10 designed for resting perimetric portions of a respective spool B thereupon.

At least one of the rollers 10 (belonging to the pair introduced previously) can be profitably associated with a respective motor element for its rotation, and consequently the rotary dragging of the respective spool B lying on the structure 2.

Through the rotation of the motorized roller 10 it will therefore be possible to impose a rotary motion on the spool B by means of which to enable the unwinding (and therefore the dispensing) of the wire A contained in it.

The transverse guide 6 can conveniently be constituted by a transverse guide shaft 6 with which the carriage 3 is associated by means of a kinematic pair chosen from a cylindrical pair and a prismatic pair.

In more detail, it must be noted that there can profitably be two transverse shafts 6: each shaft 6 will advantageously pass through the carriage 3. Each roller 10 will therefore positively be supported coaxially by a respective shaft 6.

With particular reference to an embodiment of undoubted practical and applicative interest, the transfer means 9, which are configured for transferring at least one spool B, comprise at least one containment and guiding lane 11 which is designed to temporarily support the spool B; with reference to an embodiment proposed by way of non-limiting example, such lane 11 could be designed to contain and guide the lateral disks of the spool B.

According to this example, the spool B will be resting on respective surfaces of the lane 11, namely at the perimetric edges of the disks that delimit it.

The means 9 will further usefully comprise at least one slider 12 which can slide along the lane 11 and is provided with a shoulder unit 13 which abuts against at least one portion of the edge of the spool B (according to the example illustrated previously, it will abut against at least one portion of the edge of the lateral disks of the spool B).

The slider 12 will profitably be movable between a first arrangement (shown by way of non-limiting example in all the accompanying figures) of maximum distance from the accommodation structure 2 of the spool B and a second arrangement of minimum distance from the structure 2.

The spool B present on the lane 11, in the transition from the first arrangement to the second arrangement of the slider 12, is pushed along the lane 11 (with a rolling motion or a combined rotary and translational motion) until it is delivered to the accommodation structure 2.

It should be noted that the shoulder unit 13 of the slider 12 comprises at least one cylindrical stem surmounted by an idle bushing: a part of the external surface of the idle bushing will be adapted to abut against at least one portion of the edge of the spool B (according to the example illustrated by way of example it will abut against at least one of the disks) for its combined rotary and translational motion from the magazine 4 to the structure 2.

With particular reference to a possible embodiment of certain effectiveness, it should be noted that the unloading actuator 8 of the depleted spool B is a pusher provided with a terminal sleeve, which is also suitable to abut against at least one edge of the disks that delimit the spool B for the combined rotary and translational motion of said spool B from the structure 2 to the storage unit 5.

It should further be noted that the at least one accommodation structure 2 can advantageously comprise two symmetrical structures 2, both integral with a respective supporting carriage 3 which can move, along at least one respective transverse guide 6, from the first, active configuration for dispensing the wire A, to the second, unloading configuration for delivering an empty spool B to the temporary storage unit 5 by virtue of the action of at least one respective actuator 8. The second, unloading configuration can be common to both accommodation structures 2 and will be arranged between the first, active configurations of the respective supporting carriages 3 (in such active configurations therefore the respective spool B is in a region further outward in a transverse direction with respect to the arrangement that it will assume when it will be arranged in the second, unloading configuration, which in turn is closer to the longitudinal midpoint plane of the apparatus).

The present invention also extends its protection to include a machine for forming components of electrical windings that comprises at least one guide element 2a, 2b for the wire A and at least one station for bending and cutting the wire for the formation of the specific components.

Such at least one guide element 2a, 2b can, in a possible implementation version, be in turn comprised in at least one accommodation structure 2.

The machine according to the invention will furthermore profitably comprise at least one apparatus 1 of the type described previously.

In such machine according to the invention, the at least one guide element 2a, 2b can advantageously comprise at least one snub pulley 2b which is pivoted on a block 14 which can translate by virtue of the action of an actuator 15: in such case the rule of motion with which the translatable block 14 is moved will be defined in feedback as a function of the rule of motion of the wire A advancing towards the bending and sizing station (not shown in the accompanying figures).

It should be noted that conveniently the machine according to the invention can comprise an apparatus 1 provided with two symmetrical accommodation structures 2 of the type described previously (in order to ensure higher productivity).

According to such version, which comprises the apparatus 1 provided with two structures 2, the machine according to the invention is symmetrical with respect to a vertical longitudinal midpoint plane, thus ensuring a high production rate of components of electrical windings.

It should be noted that the present application also relates to a method for changing spools B of wire A in machines of the type described previously, which entails a sequence of preset steps.

In a first step it is necessary to translate the accommodation structure 2 that contains the depleted spool B until it is placed side by side with the temporary storage unit 5.

In a second step it is necessary to push the depleted spool B from the accommodation structure 2 into the temporary storage unit 5 by means of the actuator 8.

Then it is possible, in a third step, to translate the empty accommodation structure 2 again, with a retrograde motion, until it is brought back into alignment with the magazine 4, which contains a spool B on which a predefined quantity of wire A is wound.

At this point, in a final step, it is necessary to push the spool B on which is the predefined quantity of wire A is wound from the lane 11 of the magazine 4 into the accommodation structure 2.

The wire A, at this point, can be unreeled from the spool 2 and run along the pulleys 2a, 2b and inserted into the station for bending and cutting the wire A: this operation can be carried out manually by an operator, although the possibility is not ruled out of its being completely automated.

Advantageously the present invention solves the above-mentioned problems, by providing an apparatus 1 for managing spools B of wire A in machines for forming components of electrical windings that ensures the possibility to minimize the machine shutdown periods necessary for changing the spool B.

Conveniently the apparatus 1 according to the invention does not require a direct and immediate intervention by an operator for the substitution of a depleted spool B, just as it does not require the immediate intervention of forklift trucks for supplying the new spool B. In fact the spools B loaded with wire A can be loaded into the lane 11 in advance at any time during the operation of the machine, i.e. during production of the electrical winding components of interest.

Advantageously the apparatus 1 according to the invention is indicated for production sites that have numerous machines, without the need for a large number of dedicated operators. In fact, as explained above, the advance loading of new spools B can be done at any time and not necessarily when the installed spool runs out, thus enormously facilitating the logistical organization of the production plant (which can be easily planned).

Profitably the apparatus 1 according to the invention is indicated for production sites that have numerous machines, without the need for a large number of forklift trucks.

Positively the apparatus 1 according to the invention is easily and practically implemented and low-cost: such characteristics make the apparatus 1 according to the invention and the machine that comprises it innovations that are safe in use.

The invention thus conceived is susceptible of numerous modifications and variations, all of which are within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for managing spools (B) of wire (A) in machines for forming components of electrical windings of the type comprising at least one accommodation structure (2) for at least one spool (B) containing the wire (A), and at least one supporting carriage (3) for said at least one accommodation structure (2) for said at least one spool (B), said carriage (3) being able to slide along at least one respective transverse guide (6) of said machine for the transfer of said structure (2) from a first, active configuration for dispensing said wire (A) to a second, unloading configuration, **characterized in that** it further comprises at least one magazine (4) for temporarily accommodating at least one spool (B), on which the wire (A) is wound, placed side by side with said at least one accommodation structure (2), when it is in said first, active configuration, and at least one temporary storage unit (5) for at least one empty spool (B), said magazine (4) comprising transfer means (9) which are configured for the transfer of at least one spool (B) arranged therein to said accommodation structure (2), and the second, unloading configuration being for the delivery of an empty spool (B) to said temporary storage unit (5) by virtue of the action of at least one respective unloading actuator (8).

2. The apparatus according to claim 1, **characterized in that** said at least one accommodation structure (2) comprises a couple of parallel and laterally adjacent rollers (10) designed for resting perimetric portions of a spool (B) thereupon, at least one roller of said couple of rollers (10) being associated with a respective motor element for the rotation and the consequent rotary dragging of the respective spool (B).

3. The apparatus according to claim 2, **characterized in that** said transverse guide (6) is a transverse guide shaft (6) with which said carriage (3) is associated by means of a kinematic pair chosen from a cylindrical pair and a prismatic pair.

4. The apparatus according to claim 3, **characterized in that** there are two of said transverse shafts (6), each shaft (6) passing through said carriage (3), each roller (10) designed for resting portions of said spool (B) thereupon being supported coaxially by a respective shaft (6).

5. The apparatus according to one or more of the preceding claims, **characterized in that** said transfer means (9) comprise at least one containment and guiding lane (11) which is designed to temporarily support the spool (B) and at least one slider (12) which can slide along said lane (11) and is provided with a shoulder unit (13) which abuts against at least one portion of an edge of said spool (B), said slider (12) being movable between a first arrangement of maximum distance from said accommodation structure (2) of said spool (B) and a second arrangement of minimum distance from said structure (2), said spool (B), in the transition from said first arrangement to said second arrangement, being transferred from said lane (11) to said accommodation structure (2).

6. The apparatus according to claim 5, **characterized in that** said shoulder unit (13) of said slider (12) comprises at least one cylindrical stem surmounted by an idle bushing, an external surface of said idle bushing being suitable to abut against the edge of said spool (B) for its combined rotary and translational motion from said magazine (4) to said structure (2).

7. The apparatus according to one or more of the preceding claims, **characterized in that** said unloading actuator (8) for unloading said spool (B) is a pusher provided with a terminal sleeve which is suitable to abut against at least one edge of said spool (B) for its combined rotary and translational motion from said structure (2) to said storage unit (5).

8. The apparatus according to one or more of the previous claims, **characterized in that** said at least one accommodation structure (2) comprises two symmetrical structures (2), both integral with a respective supporting carriage (3) which can move along at least one respective transverse guide (6) from the first, active configuration for dispensing said wire (A), to the second, unloading configuration for delivering an empty spool (B) to said temporary storage unit (5) by virtue of the action of at least one respective actuator (8), said second, unloading configuration being common to both said accommodation structures (2) and being arranged between the first, active configurations of the respective supporting carriages (3).

9. A machine for forming components of electrical windings of the type comprising at least one guide element (2a, 2b) for the wire (A) and at least one station for bending and cutting the wire (A) in order to form the components, **characterized in that** it comprises at least one apparatus (1) according to at least one of the preceding claims.

10. The machine according to claim 9, **characterized in that** said at least one guide element (2b) comprises at least one snub pulley which is pivoted on a block (14) which can translate by virtue of the action of an actuator (15), the rule of motion of said translatable block (14) being defined in feedback as a function of the rule of motion of said wire (A) advancing towards said bending and sizing station.

11. A method for changing spools (B) of wire (A) in machines according to at least one of claims 9 and 10, which consists in:
- translating the accommodation structure (2) that contains the depleted spool (B) until it is placed side by side with the temporary storage unit (5),
- pushing the depleted spool (B) from said accommodation structure (2) into said temporary storage unit (5),
- translating the empty accommodation structure (2) until it is brought back into alignment with said magazine (4), which contains a spool (B) on which a predefined quantity of wire (A) is wound,
- pushing said spool (B) on which the predefined quantity of wire (A) is wound from said magazine (4) into said accommodation structure (2).

## Patentansprüche

1. Eine Vorrichtung zur Handhabung von Spulen (B) von Draht (A) in Maschinen zur Herstellung von Komponenten elektrischer Wicklungen von der Art, die Folgendes umfasst: mindestens eine Aufnahmestruktur (2) für mindestens eine Spule (B), die den Draht (A) enthält, und mindestens einen Trageschlitten (3) für die mindestens eine Aufnahmestruktur (2) für die mindestens eine Spule (B), wobei der Schlitten (3) in der Lage ist, entlang mindestens einer entsprechenden transversalen Führung (6) der Maschine zu gleiten, zum Zwecke des Transfers der Struktur (2) aus einer ersten, aktiven Konfiguration zur Abgabe des Drahts (A) in eine zweite, Ablade,-Konfiguration; **dadurch gekennzeichnet, dass** sie weiter mindestens ein Magazin (4) zur vorübergehenden Aufnahme mindestens einer Spule (B) umfasst, auf die der Draht (A) aufgewickelt ist, positioniert neben die mindestens eine Aufnahmestruktur (2), wenn sie sich in der ersten, aktiven Konfiguration befindet; und mindestens eine Einheit (5) zur vorübergehenden Aufbewahrung mindestens einer leeren Spule (B); wobei das Magazin (4) Transfermittel (9) umfasst, die ausgebildet sind für den Transfer mindestens einer darin angeordneten Spule (B) zu der Aufnahmestruktur (2); und wobei die zweite, Ablade,- Konfiguration zur Abgabe einer leeren Spule (B) an die Einheit (5) zur vorübergehenden Aufbewahrung mit Hilfe mindestens eines entsprechenden Ablade-Antriebs (8) dient.

2. Die Vorrichtung gemäß Anspruch 1, **dadurch gekennzeichnet, dass** die mindestens eine Aufnahmestruktur (2) ein Paar paralleler und seitlich benachbarter Rollen (10) umfasst, konstruiert zum Aufliegen von Umfangsabschnitten einer Spule (B) darauf; wobei mindestens eine des Paares von Rollen (10) zur Drehung und daraus folgenden drehenden Mitnahme der entsprechenden Spule (B) mit einem entsprechenden Motorelement verbunden ist.

3. Die Vorrichtung gemäß Anspruch 2, **dadurch gekennzeichnet, dass** die transversale Führung (6) ein transversaler Führungsschaft (6) ist, mit welchem der Schlitten (3) über ein kinematisches Paar verbunden ist, gewählt aus einem zylindrischen Paar und einem prismatischen Paar.

4. Die Vorrichtung gemäß Anspruch 3, **dadurch gekennzeichnet, dass** zwei der transversalen Schäfte (6) vorhanden sind, wobei jeder Schaft (6) durch den Schlitten (3) verläuft, wobei jede Rolle (10) zum Aufliegen von Abschnitten der Spule (B) dient, die darauf koaxial von einem entsprechenden Schaft (6) getragen ist.

5. Die Vorrichtung gemäß einem oder mehreren der obigen Ansprüche, **dadurch gekennzeichnet, dass** die Transfermittel (9) mindestens eine Aufnahme- und Führungsschiene (11) umfassen, die dazu dient, die Spule (B) und mindestens einen Schieber (12) vorübergehend zu tragen, der entlang der Schiene (11) gleiten kann und mit einer Schultereinheit (13) ausgestattet ist, die an mindestens einem Abschnitt eines Randes der Spule (B) anliegt; wobei der Schieber (12) beweglich ist zwischen einer ersten Anordnung maximalen Abstands von der Aufnahmestruktur (2) der Spule (B) und einer zweiten Anordnung minimalen Abstands von der Struktur (2); wobei die Spule (B) beim Übergang von der ersten Anordnung in die zweite Anordnung von der Schiene (11) zu der Aufnahmestruktur (2) überführt wird.

6. Die Vorrichtung gemäß Anspruch 5, **dadurch gekennzeichnet, dass** die Schultereinheit (13) des Schiebers (12) mindestens einen zylindrischen Schaft umfasst, der von einer freien Buchse überragt wird, wobei eine Außenfläche der freien Buchse geeignet ist, an einem Rand der Spule (B) zum Zwecke ihrer kombinierten Rotations- und Translationsbewegung von dem Magazin (4) zu der Struktur (2) anzuliegen.

7. Die Vorrichtung gemäß einem oder mehreren der obigen Ansprüche, **dadurch gekennzeichnet, dass** der Ablade-Antrieb (8) zum Abladen der Spule (B) ein Schieber ist, ausgestattet mit einer abschließenden Hülse, die geeignet ist, zum Zwecke ihrer kombinierten Rotations- und Translationsbewegung von der Struktur (2) zu der Aufbewahrungseinheit (5) an mindestens einem Rand der Spule (B) anzuliegen.

8. Die Vorrichtung gemäß einem oder mehreren der obigen Ansprüche, **dadurch gekennzeichnet, dass** die mindestens eine Aufnahmestruktur (2) zwei symmetrische Strukturen (2) umfasst, beide integral mit einem entsprechenden Trageschlitten (3), der sich entlang mindestens einer entsprechenden transversalen Führung (6) aus der ersten, aktiven Konfiguration zur Abgabe des Drahts (A) in die zweite, Ablade,-Konfiguration zur Abgabe einer leeren Spule (B) an die Einheit (5) zur vorübergehenden Aufbewahrung mit Hilfe mindestens eines entsprechenden Antriebs (8) bewegen kann; wobei beide Aufnahmestrukturen (2) die zweite, Ablade,-Konfiguration gemeinsam haben, die zwischen den ersten, aktiven Konfigurationen der entsprechenden Trageschlitten (3) angeordnet ist.

9. Eine Maschine zur Herstellung von Komponenten elektrischer Wicklungen von der Art, die mindestens ein Führungselement (2a, 2b) für den Draht (A) und mindestens eine Station zum Biegen und Schneiden des Drahts (A), um die Komponenten herzustellen, umfasst; **dadurch gekennzeichnet, dass** sie mindestens eine Vorrichtung (1) gemäß mindestens einem der obigen Ansprüche umfasst.

10. Die Maschine gemäß Anspruch 9, **dadurch gekennzeichnet, dass** das mindestens eine Führungselement (2b) mindestens eine Einschnürtrommel umfasst, die drehgelenkig an einem Block (14) befestigt ist, welcher mit Hilfe eines Antriebselements (15) eine Translationsbewegung durchführen kann; wobei die Bewegungsregel des beweglichen Blocks (14) in der Rückkopplung als Funktion der Bewegungsregel des Drahts (A) definiert wird, der sich zu der Biege- und Schneidestation hinbewegt.

11. Ein Verfahren zum Wechseln von Spulen (B) von Draht (A) in Maschinen gemäß mindestens einem der Ansprüche 9 und 10, das in Folgendem besteht:
- dem Bewegen der Aufnahmestruktur (2), welche die verbrauchte Spule (B) enthält, bis sie neben der Einheit (5) zur vorübergehenden Aufbewahrung positioniert ist,
- dem Schieben der verbrauchten Spule (B) aus der Aufnahmestruktur (2) in die Einheit (5) zur vorübergehenden Aufbewahrung,
- dem Bewegen der leeren Aufnahmestruktur (2), bis sie wieder mit dem Magazin (4) fluchtet, welches eine Spule (B) enthält, auf die eine vordefinierte Menge Draht (A) aufgewickelt ist,
- dem Schieben der Spule (B), auf welche die vordefinierte Menge Draht (A) aufgewickelt ist, aus dem Magazin (4) in die Aufnahmestruktur (2).

## Revendications

1. Appareil destiné à la gestion de bobines (B) de fil (A) dans des machines de formation de composants d'enroulements électriques, du type comprenant au moins une structure de logement (2) pour au moins une bobine (B) contenant le fil (A), et au moins un chariot de support (3) pour ladite au moins une structure de logement (2) destinée à ladite au moins une bobine (B), ledit chariot (3) étant apte à coulisser le long d'au moins un guide transversal respectif (6) de ladite machine afin de transférer ladite structure (2) d'une première configuration active, destinée à la distribution dudit fil (A), vers une seconde configuration de déchargement, **caractérisé en ce qu'**il comprend en outre au moins un magasin (4) destiné à loger temporairement au moins une bobine (B), sur laquelle le fil (A) est enroulé, disposé côte à côte avec ladite au moins une structure de logement (2), lorsque celle-ci se trouve dans ladite première configuration active, et au moins une unité de stockage temporaire (5) pour au moins une bobine vide (B), ledit magasin (4) comprenant des moyens de transfert (9) configurés pour transférer au moins une bobine (B) qui y est disposée vers ladite structure de logement (2), et la seconde configuration de déchargement étant destinée à acheminer une bobine vide (B) vers ladite unité de stockage temporaire (5) grâce à l'action d'au moins un actionneur de déchargement respectif (8).

2. Appareil selon la revendication 1, **caractérisé en ce que** ladite au moins une structure de logement (2) comprend une paire de rouleaux (10) parallèles et latéralement adjacents, conçus pour supporter sur eux des parties périphériques d'une bobine (B), au moins un rouleau de ladite paire de rouleaux (10) étant associé à un élément moteur respectif pour la rotation et l'entraînement en rotation consécutif de la bobine (B) correspondante.

3. Appareil selon la revendication 2, **caractérisé en ce que** ledit guide transversal (6) est un arbre de guidage transversal (6) auquel ledit chariot (3) est associé au moyen d'une paire cinématique choisie parmi une paire cylindrique et une paire prismatique.

4. Appareil selon la revendication 3, **caractérisé en ce qu'**il y a deux desdits arbres transversaux (6), chaque arbre (6) traversant ledit chariot (3), chaque rouleau (10) conçu pour supporter des parties de ladite bobine (B) étant supporté coaxialement par un arbre respectif (6).

5. L'appareil selon une ou plusieurs des revendications précédentes, **caractérisé en ce que** lesdits moyens de transfert (9) comprennent au moins une glissière de confinement et de guidage (11) destinée à supporter temporairement la bobine (B) et au moins un coulisseau (12) pouvant coulisser le long de ladite glissière (11) et muni d'un épaulement (13) qui vient en butée contre au moins une partie d'un bord de ladite bobine (B), ledit coulisseau (12) étant mobile entre une première configuration à distance maximale de ladite structure de logement (2) de ladite bobine (B) et une deuxième configuration à distance minimale de ladite structure (2), ladite bobine (B), lors du passage de ladite première configuration à ladite deuxième configuration, étant transférée de ladite glissière (11) vers ladite structure de logement (2).

6. Appareil selon la revendication 5, **caractérisé en ce que** ledit épaulement (13) dudit coulisseau (12) comprend au moins une tige cylindrique surmontée d'une douille libre, une surface externe de ladite douille libre étant adaptée pour venir en butée contre le bord de ladite bobine (B) en vue de son mouvement combiné de rotation et de translation depuis ledit magasin (4) vers ladite structure (2).

7. Appareil selon une ou plusieurs des revendications précédentes, **caractérisé en ce que** ledit actionneur de déchargement (8) destiné à décharger ladite bobine (B) est un poussoir muni d'un manchon d'extrémité apte à venir en butée contre au moins un bord de ladite bobine (B) pour son mouvement combiné de rotation et de translation depuis ladite structure (2) vers ladite unité de stockage (5).

8. Appareil selon une ou plusieurs des revendications précédentes, **caractérisé en ce que** ladite au moins une structure de logement (2) comprend deux structures symétriques (2), toutes deux solidaires d'un chariot de support respectif (3) pouvant se déplacer le long d'au moins un guide transversal respectif (6) depuis la première configuration active destinée à la distribution dudit fil (A), à la deuxième configuration de déchargement pour acheminer une bobine vide (B) vers ladite unité de stockage temporaire (5) grâce à l'action d'au moins un actionneur respectif (8), ladite deuxième configuration de déchargement étant commune aux deux structures de logement (2) et étant disposée entre les premières configurations actives des chariots de support respectifs (3).

9. Machine destinée à former des composants d'enroulements électriques, du type comprenant au moins un élément de guidage (2a, 2b) pour le fil (A) et au moins une station destinée à plier et à couper le fil (A) afin de former les composants, **caractérisée en ce qu'**elle comprend au moins un appareil (1) selon au moins l'une des revendications précédentes.

10. Machine selon la revendication 9, **caractérisée en ce que** ledit au moins un élément de guidage (2b) comprend au moins une poulie de freinage qui est articulée sur un bloc (14) pouvant se translater sous l'action d'un actionneur (15), la loi de mouvement dudit bloc translatable (14) étant définie en asservissement en fonction de la loi de mouvement dudit fil (A) avançant vers ladite station de pliage et de coupage.

11. Procédé de changement de bobines (B) de fil (A) dans des machines selon au moins l'une des revendications 9 et 10, qui consiste à :
- déplacer la structure de logement (2) contenant la bobine vide (B) jusqu'à ce qu'elle soit placée côte à côte avec l'unité de stockage temporaire (5),
- pousser la bobine vide (B) depuis ladite structure de logement (2) dans ladite unité de stockage temporaire (5),
- déplacer la structure de logement (2) désormais vide jusqu'à ce qu'elle soit remise en alignement avec ledit magasin (4), qui contient une bobine (B) sur laquelle est enroulée une quantité prédéfinie de fil (A),
- pousser ladite bobine (B) sur laquelle est enroulée la quantité prédéfinie de fil (A) depuis ledit magasin (4) vers ladite structure de logement (2).
